# EUROPEAN PATENT APPLICATION

(11) **EP 3 567 073 A1**
(43) Date of publication of application: **13.11.2019**
(21) Application number: 18171152.4
(22) Date of filing: 08.05.2018
(51) Int. Cl.: C08K 3/04, C08K 5/14, C08K 3/105

(54) **PROCESS FOR CURING (METH)ACRYLATE-CONTAINING RESINS**

(71) Applicant: Nouryon Chemicals International B.V., 6824BM Arnhem (NL)
(72) Inventor: SPIJKERMAN, Geesje Klasina, NL-7421 AS Deventer (NL); TER BRAKE, Maaike Anne Gertrud, NL-7577 MD Oldenzaal (NL)
(74) Representative: LKGlobal UK Ltd.

(57) **Abstract**

Process for curing a (meth)acrylate-based resin filled with 1-10 wt% electroconductive particulate carbon, at a temperature in the range 5-30°C, said process involving contacting said resin with 0.03-5 phr ketone peroxide and 0.5-75 mmol/kg resin of at least one transition metal compound selected from Cu, Fe, and Mn compounds (calculated as metal).

## Description

Polymer-based materials can be reinforced by incorporating fillers or fibers. Particulate carbon is a known reinforcing material for rubbers. The advantage of particulate carbon as reinforcing material is its low price, compatibility with various matrices (e.g. rubbers and acrylates), and the ability to achieve high loadings and, consequently, strong reinforcement.
Furthermore, if the particulate carbon is electroconductive, electroconductive polymer-based materials will result, which find application in flooring coatings, shoe soles, packaging for electronic materials and powders, electrostatic painting, piping, (fuel)tanks, silos, and in production areas and devices that should be protected from static electricity.

Acrylate and methyacrylate resins are conventionally cured with dibenzoyl peroxide. This cure requires a temperature of about 80°C. In order to allow room temperature cure, an accelerator needs to be added. Tertiary aromatic amines, such as diethylaniline, ethoxylated o/p/m-toluidine, ethoxylated aniline, dimethyl aniline, dimethyl o/p/m-toluidine, and diethyl o/p/m-toluidine are conventionally used as accelerators for dibenzoyl peroxide.

Unfortunately, when the (meth)acrylate resin is filled with electroconductive particulate carbon, a dibenzoyl peroxide/amine cure system is not able to provide sufficient cure at room temperature. It is theorized that the presence of the electroconductive carbon deteriorates the accelerating effect of amines. This deterioration is more pronounced in acrylate-based resins than in styrene-based resins, probably due to the affinities between amine, carbon, and styrene. The deterioration furthermore increases, i.e. worsens, with the surface area of the carbon particulates.

Another common cure system that is conventionally used for room temperature cure of styrene-containing unsaturated polyester resins is methyl ethyl ketone peroxide with a cobalt salt (e.g. cobalt 2-ethylhexanoate or cobalt naphthenate) as accelerator. This system, however, does not work in (meth)acrylate-based resins.

It is therefore an object of the present invention to provide a process for the room-temperature cure of (meth)acrylate-based resins that are filled with electroconductive particulate carbon.

This object is met by the process of the present invention, which involves the use of a ketone peroxide and, as accelerator, a Cu, Fe, or Mn compound.

The present invention therefore relates to a process for curing a (meth)acrylate-based resin filled with 1-10 wt% electroconductive particulate carbon, at a temperature in the range 5-30°C, said process involving contacting said resin with 0.03-5 phr (weight parts per hundred weight parts resin) ketone peroxide and 0.5-75 mmol/kg resin of at least one transition metal compound selected from Cu, Fe, and Mn compounds (calculated as metal).

The term (meth)acrylate-based resin includes acrylate resins, methacrylate resins, and acrylic acid resins, and combinations thereof. It also includes unsaturated polyester (UP) resins and vinyl ester (VE) resins containing as reactive diluent an acrylic acid, an acrylate, a methacrylate, or a combination thereof.

The preferred (meth)acrylate-based resin for use in the present invention is an acrylate resin, a methacrylate resin, an acrylic acid resin, or a combination thereof.
In a more preferred embodiment, the (meth)acrylate-based resin is a mixture of methacrylates, a mixture of acrylates, or a mixture of acrylates and methacrylates, optionally also containing acrylic acid.
Examples of methacrylates are methyl methacrylate (MMA), polymethylmetacrylate (PMMA), trimethylolpropane trimethacrylate (TMPTMA), ethyleneglycol dimethacrylate (EGDMA), triethyleneglycol dimethacrylate, pentaerythritol tetramethacrylate, 1,4-butanediol dimethacrylate, ethylmethacrylate, and poly-ethylmethacrylate.
Examples of acrylates are 2-ethylhexylacrylate (EHA), poly-2-ethylhexylacrylate (PEHA), butyl acrylate, polybutyl acrylate, and pentaerythritol tetraacrylate.

Suitable UP resins to be cured by the process of the present invention are so-called ortho-resins, iso-resins, iso-npg resins, and dicyclopentadiene (DCPD) resins. Examples of such resins are maleic, fumaric, allylic, vinylic, and epoxy-type resins, bisphenol A resins, terephthalic resins, and hybrid resins.
The term "vinyl ester resin" refers to a resin produced by the esterification of an epoxy resin (e.g. a diglycidyl ether of bisphenol A) with an unsaturated monocarboxylic acid such as a methacrylate, diacrylate, dimethacrylate, or oligomers thereof.
The unsaturated polyester or vinyl ester resin contains a reactive diluent selected from the group consisting of acrylic acid, methacrylic acid, acrylates, methacrylates, and combinations thereof. In addition thereto, the resin may contain one or more (reactive) diluents that are not in accordance with this group. Examples of such reactive diluents are maleimides, citraconimides, triallyl cyanurate (TAC), triallyl isocyanurate (TAIC), allylesters, vinylesters, vinylethers, and (substituted) styrenes. If styrene is present, it is desired to keep the amount of styrene below 2 wt%, based on the weight of reactive diluent-containing resin. Most preferably, styrene is completely absent from the process and the curable resin composition of the present invention. In a preferred embodiment, all reactive diluents used in the process and the curable composition according to the invention are selected from the above-defined group.

More preferably, the reactive diluent is selected from the group consisting of (meth)acrylate, methyl (meth)acrylate, ethyl (meth)acrylate, ethylhexyl(meth)acrylate, butyl(meth)acrylate, 2-hydroxyethyl (meth)acrylate, propyl (meth)acrylate, cyclohexyl (meth)acrylate, glycidyl (meth)acrylate, diacrylates, dimethacrylates, triacrylates, trimethacrylates, tetra-acrylates, tetramethacrylates, and combinations thereof.
Even more preferably, the reactive diluent in accordance with the above-mentioned group is selected from the group consisting of acrylate, methacrylate, diacrylates, dimethacrylates, triacrylates, trimethacrylates, tetra-acrylates, tetramethacrylates, and combinations thereof.
Specific examples of di(meth)acrylates are poly(ethyleneglycol) di(meth)acrylates, 1,2-ethanediol di(meth)acrylate, 1,2-propanediol di(meth)acrylate, 1,3-propanediol di(meth)acrylate, 1,5-pentanediol di(meth)acrylate,1,4-butanediol di(meth)acrylate, 1,3-butanediol di(meth)acrylate, 2,3-butanediol di(meth)acrylate, 1,6-hexanediol di(meth)acrylate, diethyleneglycol di(meth)acrylate, triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, poly(propyleneglycol) di(meth)acrylates, tricyclodecane dimethylol di(meth)acrylate, 1,10-decanediol di(meth)acrylate, and tetraethylene glycol di(meth)acrylate.
An example of a tri(meth)acrylate is trimethylolpropane tri(meth)acrylate.
An example of a tetra(meth)acrylate is pentaerythritol tetra(meth)acrylate.

The total amount of reactive diluent in the UP or VE resin is preferably at least 0.1 wt%, based on the weight of reactive diluent-containing unsaturated polyester or vinyl ester resin, more preferably at least 1 wt%, and most preferably at least 5 wt%. The total amount of reactive diluent is preferably not more than 50 wt%, more preferably not more than 40 wt%, and most preferably not more than 35 wt% based on the weight of reactive diluent-containing unsaturated polyester or vinyl ester resin.

Examples of electroconductive particulate carbon that can be used in the process of the present invention include electroconductive carbon black, graphene, and carbon (nano)tubes.

The electroconductiviy of particulate carbon is mainly determined by the specific surface area: the larger the surface area, the higher the conductivity. Therefore, electroconductive particulate carbon is defined in the present specification as particulate carbon having BET surface area of at least 50 m²/g, preferably 50-1500 m²/g, more preferably 100-1500 m²/g, and most preferably 500-1500 m²/g.

The electroconductive particulate carbon preferably does not contain sizing agents or other agents that may improve adhesion with, for instance, epoxy resins.

The electroconductive particulate carbon is added to the resin in an amount of 1-10 wt%, preferably 1.5-8 wt%, and most preferably 1.5-5 wt%. The electroconductive particulate carbon can be added as such, but also in admixture with, for instance, and anti-dusting material, such as 2-hydroxy-ethylmethacrylate (HEMA), styrene, wax, or acrylate resin.

The peroxide used in the process of the present invention is a ketone peroxide. Examples of ketone peroxides are methyl ethyl ketone peroxide, methyl isopropyl ketone peroxide, methyl isobutyl ketone peroxide, and cyclohexanone peroxide, or a combination thereof. This peroxide can have the formula 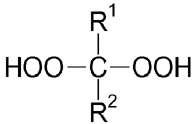 or the formula

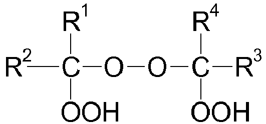

These formulae represent methyl ethyl ketone peroxide when R¹ and R⁴ are methyl and R² and R³ are ethyl. They represent methyl isopropyl ketone peroxide when R¹ and R⁴ are methyl and R² and R³ are isopropyl. They represent methyl isobutyl ketone peroxide when R¹ and R⁴ are methyl and R² and R³ are isobutyl. They represent cyclohexanone peroxide when R¹ and R² are linked to form a cyclohexane ring and R³ and R⁴ are linked to form a cyclohexane ring.
The first formula reflects a so-called type-4 (T4) ketone peroxide; the second formula a so-called type-3 (T3) ketone peroxide. Both types are generally present in ketone peroxide formulations, in addition to hydrogen peroxide.
The most preferred ketone peroxide for use in this process is methyl isopropyl ketone peroxide.

The total amount of ketone peroxide selected from the group defined above that is preferably used in the process of the present invention is 0.03-5 parts by weight (pbw), more preferably 0.15-2.5 pbw, most preferably 0.3-1.5 pbw, expressed as weight parts of pure peroxide per 100 parts weight parts of resin. Higher peroxide concentrations lead to short (meth)acylate chains, which leads to tackyness. This may be suitable for adhesives, but not for composite materials.

In addition to the ketone peroxides defined above, one or more additional peroxides may be added to the resin in the process according to the invention. Examples of such additional peroxides are hydrogen peroxide, hydroperoxides, peroxyesters, and peroxycarbonates.
The skilled person will understand that the peroxides can be combined with conventional additives, such as phlegmatizers. Examples of phlegmatizers are hydrophilic esters and hydrocarbon solvents.

The cure accelerator is at least one transition metal compound selected from Cu, Fe, and Mn compounds. More preferred are Cu and Mn compounds. Most preferred are Cu compounds, in particular Cu(II) compounds.
Examples of suitable transition metal compounds are salts and complexes of these metals.

Suitable manganese, copper, and iron compounds are their halides, nitrates, sulphates, sulphonates, phosphates, phosphonates, oxides, carboxylates, and complexes of these metals with a ligand. Examples of suitable carboxylates are lactate, 2-ethyl hexanoate, acetate, proprionate, butyrate, oxalate, laurate, oleate, linoleate, palmitate, stearate, acetyl acetonate, octanoate, nonanoate, heptanoate, neodecanoate, or naphthenate. Examples of ligands are pyridine and the tridentate, tetradentate, pentadentate, and hexadentate nitrogen donor ligands disclosed in WO 2011/83309.
Preferred manganese compounds are manganese chloride, nitrate, sulphate, lactate, 2-ethyl hexanoate, octanoate, nonanoate, heptanoate, neodecanoate, naphthenate, and acetate, and the Mn complexes of pyridine, porphirine-based ligands, and of the tridentate, tetradentate, pentadentate, or hexadentate nitrogen donor ligands disclosed in WO 2011/83309. Any one of Mn(II), Mn(III), Mn(IV), and Mn(VII) compounds can be used.
Preferred copper compounds are copper chloride, nitrate, sulphate, lactate, 2-ethyl hexanoate, octanoate, nonanoate, heptanoate, neodecanoate, naphthenate, and acetate. Both Cu(I) and Cu(II) compounds can be used. Preferred iron compounds are iron chloride, nitrate, sulphate, lactate, 2-ethyl hexanoate, octanoate, nonanoate, heptanoate, neodecanoate, naphthenate, acetate, and iron complexes of pyridine, porphirine-based ligands, or the tridentate, tetradentate, pentadentate, or hexadentate nitrogen donor ligands of WO 2011/83309. Both Fe(II) and Fe(III) can be used. More preferably, it is an iron(II) or iron(III) complex of a tridentate or pentadentate nitrogen donor ligand according to WO 2011/83309.
Preferred nitrogen donor ligands according to WO 2011/83309, for both Mn and Fe, are the bispidon ligands and the TACN-Nx ligands. The preferred bispidon ligand is dimethyl-2,4-di-(2-pyridyl)-3-methyl-7-(pyridin-2-ylmethyl)-3,7-diaza-bicyclo[3.3.1] nonan-9-one-1,5-dicarboxylate (N2py3o-Cl). The preferred TACN-Nx ligand is 1,4,7-trimethyl-1,4,7-triazacyclononane (Me₃-TACN).

The total amount of transition metal selected from iron, manganese, copper, and mixtures thereof to be used in the process according to the present invention is (calculated as metal) preferably 0.5-75 mmol/kg resin, more preferably 2-50 mmol/kg, even more preferably 2-25 mmol/kg, and most preferably 2-10 mmol/kg resin.

In addition to the transition metal selected from iron, manganese, copper, and combinations thereof, one or more additional transition metal compounds may be present in the radically curable composition of the present invention. Examples of suitable metals are cobalt, titanium, vanadium, tin, chromium, nickel, molybdenum, germanium, strontium, palladium, platinum, niobium, antimony, rhenium, osmium, iridium, platinum, gold, mercury, tellurium, rubidium, and/or bismuth compounds. Cobalt compounds are the least preferred because of the legislative and toxicity problems involved with that metal.
In a preferred embodiment, no transition metal compounds other than iron, manganese, and/or copper compounds are used in the process of the present invention.

The transition metal compound is preferably added to the resin in the form a solution ("the accelerator solution"), containing a solvent and optionally additional compounds.

Examples of suitable solvents include aliphatic hydrocarbon solvents, aromatic hydrocarbon solvents, and solvents that carry an aldehyde, ketone, ether, ester, alcohol, phosphate, or carboxylic acid group. Examples of suitable solvents are aliphatic hydrocarbon solvents such as white spirit and odourless mineral spirit (OMS), aromatic hydrocarbon solvents such naphthenes and mixtures of naphthenes and paraffins, isobutanol; pentanol; 1,2-dioximes, N-methyl pyrrolidinone, N-ethyl pyrrolidinone; dimethyl formamide (DMF); dimethyl sulphoxide (DMSO); 2,2,4-trimethyl pentanediol diisobutyrate (TxIB); esters such as dibutyl maleate, dibutyl succinate, ethyl acetate, butyl acetate, mono-and diesters of ketoglutaric acid, pyruvates, and esters of ascorbic acid such as ascorbic palmitate; aldehydes; mono- and diesters, more in particular diethyl malonate and succinates; 1,2-diketones, in particular diacetyl and glyoxal; benzyl alcohol, and fatty alcohols.
A specifically desired type of solvent is a hydroxy-functional solvent, which includes compounds of the formula HO-(-CH₂-C(R¹)₂-(CH₂)ₘ-O-)ₙ-R², wherein each R¹ is independently selected from the group consisting of hydrogen,alkyl groups with 1-10 carbon atoms, and hydroxyalkyl groups with 1 to 10 carbon atoms, n=1-10, m=0 or 1, and R² is hydrogen or an alkyl group with 1-10 carbon atoms. Most preferably, each R¹ is independently selected from H, CH₃, and CH₂OH. Examples of suitable hydroxy-functional solvents are glycols like diethylene monobutyl ether, ethylene glycol, diethylene glycol, dipropylene glycol, and polyethylene glycols, glycerol, and pentaerythritol.

Examples of additional compounds are alkali or alkaline earth metal compounds, phosphorous-containing compounds, promoters, and/or a 1,3-diketones.
Examples of 1,3-diketones are acetyl acetone, benzoyl acetone, and dibenzoyl methane, and acetoacetates such as diethyl acetoacetamide, dimethyl acetoacetamide, dipropyl acetoacetamide, dibutyl acetoacetamide, methyl acetoacetate, ethyl acetoacetate, propyl acetoacetate, and butyl acetoacetate. Examples of alkali or alkaline metal compounds are alkali or alkaline metal carboxylate salts such as the 2-ethyl hexanoates, octanoates, nonanoates, heptanoates, neodecanoates, and naphthenates of alkali metals or alkaline earth metals. A preferred alkali metal is K.
Examples of phosphorous-containing compounds are phosphorous compounds with the formulae P(R)₃ and P(R)₃=O, wherein each R is independently selected from hydrogen, alkyl with 1 to 10 carbon atoms, and alkoxy groups with 1 to 10 carbon atoms. Preferably, at least two R-groups are selected from either alkyl groups or alkoxy groups. Specific examples of suitable phosphorous-containing compounds are diethyl phosphate, dibutyl phosphate, tributyl phosphate, triethyl phosphate (TEP), dibutyl phosphite, and triethyl phosphate.
Acetoacetates are particularly preferred promoters. Particularly preferred is diethyl acetoacetamide. Even more preferred is a combination of diethyl acetoacetamide and potassium 2-ethyl hexanoate.
(Bi)pyridine or non-aromatic nitrogen-containing bases that form strong complexes with the transition metal may also be present in the accelerator solution, such as tertiary amines like triethyl amine, polyamines like 1,2-(dimethyl amine)ethane, secondary amines like diethyl amine, ethoxylated amines like triethanol amine, dimethylamino ethanol, diethanol amine (DETA), or monoethanol amine.
It may further be desired to have a reducing agent present in the accelerator solution. Examples of reducing agents are ascorbic acid, sodium formaldehyde sulphoxylate (SFS), reducing sugars like glucose and fructose, oxalic acid, phosphines, phosphites, organic or inorganic nitrites, organic or inorganic sulphites, organic or inorganic sulphides, mercaptanes, and aldehydes, and mixtures thereof. Ascorbic acid, which term in this specification includes L-ascorbic acid and D-isoascorbic acid, is the preferred reducing agent.

The accelerator solution can be prepared by simply mixing the ingredients, optionally with intermediate heating and/or mixing steps.

An accelerator solution that performs exceptionally good in the process of the present invention is a solution that is substantially free of amines and comprises a Cu(II) compound, a promoter, a solvent, and potassium carboxylate.
The preferred promoter is diethylacetoacetamide.
The preferred solvent is a glycol, more preferably diethylene glycol.
The solution comprises the Cu(II) compound in a concentration of 0.5-5 wt%, preferably 1-2 wt%, calculated as metal. The solvent concentration is preferably 10-50 wt%, more preferably 20-40 wt%. The potassium carboxylate concentration is preferably 1-10 wt%, more preferably 2-5 wt% (calculated as K). The complexing agent concentration is preferably 30-60 wt%, more preferably 40-50 wt%.

The accelerator solution is generally employed in amounts of at least 0.01 wt%, preferably at least 0.1 wt%, and preferably not more than 5 wt%, more preferably not more than 3 wt% of the accelerator solution, based on the weight of the resin.

In order to cure the (meth)acrylate resin, the electroconductive particulate carbon, the transition metal compound (in the form of an accelerator solution), and the peroxide are mixed and dispersed in the resin. The curing process can be carried out at "room temperature", which may vary from 5 to 30°C.

The resulting cured product is preferably conductive or semi-conductive. The volume resistivity is taken as a measure for the conductivity. The volume resistivity can be determined as explained in the Examples below. Materials with a volume resistivity above 1·10⁹ Ω are considered non-conductive; materials with a volume resistivity in the range 1·10⁶ - 1·10⁹ Ω are considered anti-static, but not conductive; materials with a volume resistivity in the range 1·10³ - 1·10⁶ Ω are considered semi-conductive; materials with a volume resistivity below 1·10³ Ω are considered conductive.

The cured compositions find use in various applications, including chemical anchoring, roofing, construction, relining, pipes and tanks, windmill blades, laminates, automotive parts cars, trucks, trains, plains, flooring coatings, shoe soles, packaging for electronic materials and powders, electrostatic painting, piping, (fuel)tanks, silos, and in production areas and devices that should be protected from static electricity.

### EXAMPLES

Commercially available (meth)acrylate resins were cured with different cure systems (dibenzoyl peroxide + amine accelerator or ketone peroxide + transition metal accelerator) in the absence and in the presence of a particulate carbon.
The cure performance was analysed by the method of the Society of Plastic Institute (SPI method F/77.1). This method involves measuring the peak exotherm, the time to peak, and the gel time. According to this method, 25 g of a mixture comprising 100 weight parts of resin, several weight parts of peroxide (for amounts: see Tables), and several weight parts of accelerator (for amounts: see Tables) were poured into a test tube and a thermocouple was placed through the enclosure at the centre of the tube. The glass tube was then placed in a climate controlled room maintained at 20°C and the time-temperature curve was measured. From the curve the following parameters were determined: Gel time (Gt) = time in minutes elapsed between the start of the experiment and 5.6°C above the bath temperature.
Time to peak exotherm (TTP) = time elapsed between the start of the experiment and the moment the peak exotherm was reached.
Peak Exotherm (PE) = the maximum temperature that was reached.

The following resins were used:
- Acrylate syrup comprising MMA, PMMA, and TMPTMA, prepared by dissolving 25 wt% PMMA in 74 wt% MMA while stirring and heating at 55°C, followed by the addition of about 1 wt% TMPTMA.
- Duracon® 205 comprising MMA, PMMA, EHA, and PEHA

The following peroxides were used:
- Dibenzoyl peroxide: Perkadox® CH-50X (ex-AkzoNobel)
- Methyl ethyl ketone peroxide (MEKP): Butanox® M-50 (ex AkzoNobel)
- Methyl isopropyl ketone peroxide (MIPKP): Butanox® P-50 (ex AkzoNobel)
- Isopropylcumyl hydroperoxide: Trigonox® M-55 (ex AkzoNobel)
- Cumyl hydroperoxide: Trigonox® K-90 (ex AkzoNobel)
- Para-menthane hydroperoxide: Glidox™ 300 (ex-Symrise)

The following accelerators were used:
- Ethoxylated p-toluidine: Accelerator NL-67 (ex-AkzoNobel)
- Diethyl aniline: Accelerator NL-64-100 (ex-AkzoNobel)
- Dimethyl-p-toluidine: Accelerator NL-65-100 (ex-AkzoNobel)
- Cobalt octoate: Accelerator NL-51P (ex-AkzoNobel)
- Nouryact® CF12N (ex-AkzoNobel), an accelerator solution comprising Cu(II) acetate, diethylene glycol, potassium neodecanoate, diethylacetoateamide, and diethanolamine.
- Modified Nouryact® CF12N, which differs from Nouryact® CF-12N in the absence of diethanol amine.
- Accelerator CF20 (ex-AkzoNobel), an accelerator solution comprising Cu(II) naphthenate, diethylene glycol, L-ascorbic acid, ammonium acetate, dibutyl phosphate, 2,2'-bipyridine, and Mn acetate.
- Accelerator CF32 (ex-AkzoNobel), an accelerator solution comprising diethylene glycol, copper(I)chloride, diethanolamine, dibutyl phosphate, propylene glycol, and Iron(1+), chloro[rel-1,5-dimethyl (1R,2S,4R,5S)-9,9-dihydroxy-3-methyl-2,4-di(2-pyridinyl-kappa.N)-7-[(2-pyridinyl-.kappa.N)methyl]-3,7-diazabicyclo[3.3.1]nonane-1,5-dicarboxylate-.kappa.N3,.kappa.N7]-, chloride (1:1), (OC-6-63)-

The following fillers were used:
- Ketjenblack® EC330JMA (ex-AkzoNobel) - 30 wt% electroconductive carbon black with a BET surface area of about 800 m²/g in 2-hydroxy-ethylmethacrylate (HEMA)
- Ketjenblack® EC300J (ex-AkzoNobel) - electroconductive carbon black with a BET surface area of about 800 m²/g
- Ketjenblack® EC600JD (ex-AkzoNobel) - electroconductive carbon black with a BET surface area of about 1400 m²/g
- Ensaco® 350 (ex-Imerys) - electroconductive carbon black with a BET surface area of about 770 m²/g
- Ensaco® 250(ex-Imerys) - electroconductive carbon black with a BET surface area of about 65 m²/g
- Graphene platelets 2nm, ex IoLiTec Ionic Liquids Technologies GmbH, with a BET surface area of about 750 m2/g
- Nanocyl® NC7000 (ex-Nanocyl) - multiwall carbon nanotubes with a BET surface area of 250-300 m²/g
- Tuball™ Matrix 201 (ex-OCSiAl) - concentrate of single wall carbon nanotubes
- Tuball™ Matrix 301 (ex-OCSiAl) - concentrate of single wall carbon nanotubes
- Aluminium trihydrate (ATH) (Martinal ON-310 ex-Albermarle)

Table 1 shows that, in the absence of particulate carbon, acrylate syrup can be cured satisfactorily with BPO and various amine accelerators. However, upon addition of Ketjenblack EC330JMA, cure deteriorates dramatically:

**Table 1 - Comparative Experiments: methacrylate cure with BPO/amine in the absence and presence of carbon electroconductive carbon black (amounts in parts by weight)**

| | Experiment no. | | | | | | | |
|---|---|---|---|---|---|---|---|---|
| | 1 | 2 | 3 | 4 | 5 | 6 | 7 | 8 |
| Acrylate syrup | 100 | 100 | 100 | 100 | 100 | 100 | 100 | 100 |
| Ketjenblack EC330JMA | | 4 | | 4 | | 4 | | 4 |
| Acc. NL-67 | 0.05 | 0.05 | 0.5 | 0.5 | | | | |
| Acc. NL64-100 | | | | | 0.5 | 0.5 | | |
| Acc. NL65-100 | | | | | | | 1 | 1 |
| Perkadox CH-50X | 3 | 3 | 3 | 3 | 3 | 3 | 2 | 2 |
| | | | | | | | | |
| Geltime (min) | 30 | no cure | 5 | no cure | 26 | no cure | 5 | no cure |
| Time to peak (min) | 62 | | 16 | | 52 | | 22 | |
| Peak exotherm (°C) | 160 | | 161 | | 156 | | 83 | |

Table 2 shows that not only Ketjenblack EC330JMA, but also other particulate carbons deteriorate the cure of acrylate syrup with BPO/amine. Aluminium trihydrate (ATH), on the other hand, hardly affects the cure:

**Table 2 - Comparative Experiments: methacrylate cure with BPO/amine in the presence of different types of particulate carbon (amounts in parts by weight)**

| | Experiment no. | | | | | | | | |
|---|---|---|---|---|---|---|---|---|---|
| | 9 | 10 | 11 | 12 | 13 | 14 | 15 | 16 | 18 |
| Acrylate syrup | 100 | 100 | 100 | 100 | 100 | 100 | 100 | 100 | 100 |
| Ketjenblack 300 | 1.5 | | | | | | | | |
| Ketjenblack 600 | | 1.5 | | | | | | | |
| Ensaco 350 | | | 1.5 | | | | | | |
| Ensaco 250 | | | | 1.5 | | | | | |
| Graphene platelets 2nm | | | | | 1 | | | | |
| Nanocyl NC7000 | | | | | | 1 | | | |
| Tuball 201 | | | | | | | 1 | | |
| Tuball 301 | | | | | | | | 1 | |
| ATH | | | | | | | | | 1.5 |
| Acc. NL64-100 | 0.5 | 0.5 | 0.5 | 0.5 | 0.5 | 0.5 | 0.5 | 0.5 | 0.5 |
| Perkadox CH-50X | 3 | 3 | 3 | 3 | 3 | 3 | 3 | 3 | 3 |
| | | | | | | | | | |
| Geltime (min) | No cure | No cure | No cure | No cure | No cure | No cure | No cure | No cure | 30 |
| Time to peak (min) | | | | | | | | | 55 |
| Peak exotherm (°C) | | | | | | | | | 153 |

Table 3 shows that particulate carbon does not significantly affect the cure of acrylate syrup with an MiPKP/Cu cure system:

**Table 3 -Experiments: methacrylate cure with Butanox® 50 / Nouryact CF12 in the presence of different types of particulate carbon (amounts in parts by weight)**

| | Experiment no. | | | | | | | | | | |
|---|---|---|---|---|---|---|---|---|---|---|---|
| 28 | 19 | 20 | 21 | 22 | 23 | 24 | 25 | 26 | 27 | 28 | 30 |
| Acrylate syrup | 100 | 100 | 100 | 100 | 100 | 100 | 100 | 100 | 100 | 100 | 100 |
| Ketjenblack EC330JMA | | 4 | | | | | | | | | |
| Ketjenblack 300 | | | 1.5 | | | | | | | | |
| Ketjenblack 600 | | | | 1.5 | | | | | | | |
| Ensaco 350 | | | | | 1.5 | | | | | | |
| Ensaco 250 | | | | | | 1.5 | | | | | |
| Graphene platelets 2nm | | | | | | | 1 | | | | |
| Nanocyl NC7000 | | | | | | | | 1 | | | |
| Tuball 201 | | | | | | | | | 1 | | |
| Tuball 301 | | | | | | | | | | 1 | |
| ATH | | | | | | | | | | | 1.5 |
| Nouryact CF12N | 3 | 3 | 3 | 3 | 3 | 3 | 3 | 3 | 3 | 3 | 3 |
| Butanox P-50 | 3 | 3 | 3 | 3 | 3 | 3 | 3 | 3 | 3 | 3 | 3 |
| | | | | | | | | | | | |
| Geltime (min) | 8 | 9 | 13 | 13 | 10 | 8 | 5 | 4 | 3 | 4 | 10 |
| Time to peak (min) | 33 | 35 | 37 | 39 | 34 | 30 | 31 | 28 | 26 | 26 | 31 |
| Peak exotherm (°C) | 116 | 108 | 105 | 104 | 105 | 110 | 109 | 109 | 112 | 111 | 116 |

A thin layer was prepared with the composition of Experiment 20, as follows: the carbon black was added to the resin and mixed into the resin matrix by means of a high speed mixer for 10 minutes at 1500 rpm. During mixing, the temperature of the mixture increased to about 30°C. After cooling down to room temperature, the accelerator and the peroxide were mixed in by hand.
A tin lid was placed on a wooden plank. The resin-containing mixture was added to the tin lid and covered with a polyester foil. The time and temperature during the experiment was measured with a thermocouple.

The conductivity and volume resistivity of the cured sample was measured by ASTM D257. Electrodes were applied at both sides of the sample and a certain voltage (0-20V) was applied at one side. Current was measured at the other side and the volume resistivity was calculated with Ohms law.

The cured sample was semi-conductive; its volume resistivity was 1.9·10³ Ω·cm.

Table 4 shows that ketone a ketone peroxide/Cu system gives sufficient cure in the presence of particulate carbon, whereas a BPO/amine, ketone peroxide/Co, and hydroperoxide/Cu systems do not:

**Table 4 - (Comparative) experiments: Duracon cure with different peroxides in the absence and presence of particulate carbon (amounts in parts by weight)**

| | Experiment no. | | | | | | | | | |
|---|---|---|---|---|---|---|---|---|---|---|
| | 19 | 20 | 21 | 22 | 23 | 24 | 25 | 26 | 27 | 28 |
| Duracon 205 | 100 | 100 | 100 | 100 | 100 | 100 | 100 | 100 | 100 | 100 |
| Ketjenblack EC330JMA | | 4 | | 4 | | | | 4 | | |
| Nouryact CF12N | 3 | 3 | | | | | | | 3 | 3 |
| Acc. NL64-100 | | | 0.5 | 0.5 | | | | | | |
| Acc. NL51-P | | | | | 0.5 | 1 | | | | |
| Modified Nouryact CF12 | | | | | | | 2 | 2 | | |
| Butanox P-50 | 3 | 3 | | | | | 2 | 2 | | |
| Perkadox CH50X | | | 3 | 3 | | | | | | |
| Butanox M-50 | | | | | 2 | 2 | | | | |
| Trigonox M-55 | | | | | | | | | 3 | |
| Glidox 300 | | | | | | | | | | 3 |
| | | | | | | | | | | |
| Geltime (min) | 23 | 4 | 73 | no cure | no cure | no cure | 6 | 11 | no cure | no cure |
| Time to peak (min) | 29 | 23 | 122 | | | | 27 | 34 | | |
| Peak exotherm (°C) | 114 | 78 | 116 | | | | 135 | 155 | | |

Table 5 shows that ketone peroxide/Mn and ketone peroxide/Fe cure systems are also suitable in particulate carbon-filled acrylate systems, whereas hydroperoxide/Mn cure systems are not:

**Table 5 - (Comparative) experiments: methacrylate cure with different peroxides and accelerators in the absence and presence of particulate carbon (amounts in parts by weight)**

| | Experiment no. | | | | | |
|---|---|---|---|---|---|---|
| | 30 | 31 | 32 | 33 | 34 | 35 |
| Acrylate syrup | 100 | 100 | 100 | 100 | 100 | 100 |
| Ketjenblack EC330JMA | | 4 | | 4 | | 4 |
| Nouryact CF12N | | | | | | |
| Nouryact CF32 | 3 | 3 | | | | |
| Nouryact CF20 | | | 3 | 3 | 3 | 3 |
| Butanox P-50 | 3 | 3 | 3 | 3 | | |
| Trigonox K-90 | | | | | 3 | 3 |
| | | | | | | |
| Geltime (min) | 47 | 86 | 12 | 17 | 78 | no cure |
| Time to peak (min) | 120 | 183 | 54 | 61 | 148 | - |
| Peak exotherm (°C) | 143 | 126 | 146 | 142 | 125 | |

## Claims

1. Process for curing a (meth)acrylate-based resin filled with 1-10 wt% electroconductive particulate carbon, at a temperature in the range 5-30°C, said process involving contacting said resin with 0.03-5 phr ketone peroxide and 0.5-75 mmol/kg resin of at least one transition metal compound selected from Cu, Fe, and Mn compounds (calculated as metal).

2. Process according to claim 1 wherein the (meth)acrylate-based resin is a mixture of methacrylates, a mixture of acrylates, or a mixture of acrylates and methacrylates, optionally also containing acrylic acid.

3. Process according to claim 2 wherein the methacrylates are selected from the group consisting of methyl methacrylate (MMA), polymethylmetacrylate (PMMA), trimethylolpropane trimethacrylate (TMPTMA), ethyleneglycol dimethacrylate (EGDMA), triethyleneglycol dimethacrylate, pentaerythritol tetramethacrylate, 1,4-butanediol dimethacrylate, ethylmethacrylate, and poly-ethylmethacrylate,

4. Process according to claim 2 wherein the acrylates are selected from the group consisting of 2-ethylhexylacrylate (EHA), poly-2-ethylhexylacrylate (PEHA), butyl acrylate, polybutyl acrylate, and pentaerythritol tetraacrylate

5. Process according to any one of the preceding claims wherein the electroconductive particulate carbon has a BET surface area in the range 50-1500 m²/g, preferably 100-1500 m²/g, and most preferably 500-1500 m²/g.

6. Process according to any one of the preceding claims wherein the electroconductive particulate carbon is electroconductive carbon black.

7. Process according to any one of the preceding claims wherein the electroconductive particulate carbon is present in the resin in a concentration of 1.5-5.0 wt%.

8. Process according to any one of the preceding claims wherein the transition metal compound is selected from Cu and Mn compounds.

9. Accelerator solution comprising a Cu(II) compound, a promoter, a solvent, and potassium carboxylate, the solution being substantially free of amine.

10. Accelerator solution according to claim 9 wherein the promoter is diethylacetoacetamide.

11. Accelerator solution according to claim 9 or 10 wherein the solvent is a glycol, preferably diethylene glycol.
